# EUROPEAN PATENT APPLICATION

(11) **EP 2 613 449 A2**
(43) Date of publication of application: **10.07.2013**
(21) Application number: 11822115.9
(22) Date of filing: 30.08.2011
(51) Int. Cl.: H04B 1/40

(54) **METHOD AND SYSTEM FOR CONTROLLING AN INTERNET BROWSING MODE OF A PORTABLE PHONE IN ACCORDANCE WITH THE RECOGNITION OF A DISPLAY MODE OF THE PORTABLE PHONE**

(30) Priority: 30.08.2010 KR 20100084000
(71) Applicant: Ryu, Sang-Kyu, Gyeonggi-do 437-727 (KR)
(72) Inventor: LEE, Yong-Woo, Seoul 131-878 (KR)
(74) Representative: Garavelli, Paolo
(86) International application number: PCT/KR2011/006407
(87) International publication number: WO 2012/030140

(57) **Abstract**

The present invention relates to a method and system for controlling an Internet browsing mode of a portable phone, wherein the method and system involve recognizing a display mode of the portable phone and converting, upon the expansion of a screen size, the display of the screen to a PC version of a webpage corresponding to a mobile version of the webpage currently being displayed. The method for controlling an Internet browsing mode of a portable phone according to the present invention comprises the following steps: recognizing a current display mode as a basic screen mode in a portable phone; recognizing a mobile version mode for displaying a mobile version of a webpage in the basic screen mode; recognizing that the Internet display which has been executed in the mobile version mode in the basic screen mode is expanded to an expanded screen mode; searching for an address of a PC version of a webpage corresponding to the mobile version of the webpage; receiving the PC version of the webpage using the found address; and displaying the PC version of the webpage in the expanded screen mode.

## Description

### CROSS-REFERENCE TO RELATED APPLICATION

This application claims the benefit of Korean Patent Application No. 10-2010-0084000, filed on August 30, 2010 in the Korean Intellectual Property Office, the disclosure of which is incorporated herein by reference.

### Technical Field

The present invention relates to a method and system for controlling an internet browsing mode of a portable phone, and the method and system automatically convert a display displaying a mobile version of a webpage to a display displaying a PC version of a webpage corresponding to the mobile version of the webpage, if a screen size of the portable phone is expanded to a maximized screen size or the portable phone is connected to an external display device, when the mobile version of a webpage is displayed in an internet browser of the portable phone.

### Background Art

This application claims the benefit of the Korean Patent Application No. 10-2010-0084000 filed on August 30, 2010, which is hereby incorporated by reference as if fully set forth herein.

Wireless internet is possible in a portable phone through a wireless network or a Wi-Fi network. In a portable phone, a mobile version of a webpage besides a PC version of a webpage is serviced separately at the same time due to a limitation of a size of a portable phone.

For example of a naver home page, an address of a PC version of a webpage is www.naver.com. In the PC version of a webpage, an every contents is displayed as it is. However, in the mobile version of a webpage, an every contents or some contents of the PC version of a webpage are summarized to be displayed on an icon and text basis. Also, in the mobile version of a webpage, a button denoting "PC version" is displayed in a lower portion, and thus, when the button is selected, the portable phone receives a PC version of a webpage corresponding to the mobile version of a webpage to display the PC version of a webpage. Generally, users using portable phones save an address of a mobile version of a webpage in a bookmark. That is, first of all, users browse a web browser in a mode of a mobile version of a webpage, and then, if users find an interesting webpage, users select the button of "PC version" to browse a web browser in a mode of a PC version of a webpage.

In the above-described internet environment, a user first searches contents in a mobile version of a webpage. Then, if a user wants to get more details, a user scrolls the mobile version of a webpage to a lower portion of the mobile version of a webpage to select the button of "PC version" and is provided with a PC version of a webpage to search contents, or a user inputs an address of a PC version of a webpage into an address window of a web browser and is provided with a PC version of a webpage to search contents.

In particular, because contents in the mobile version of a webpage are generated by summarizing an original webpage due to a limitation of a size of a screen of a portable phone, it is useful to search and check favorite information, but there is a limitation of available information. Therefore, users who regard it as an inconvenience only use a PC version of a webpage.

### Disclosure of Invention

Accordingly, the present invention is directed to provide a method and system for controlling an internet browsing mode of a portable phone, which substantially obviates one or more problems due to limitations and disadvantages of the related art. An aspect of the present invention is directed to provide a method and system for controlling an internet browsing mode of a portable phone, which automatically converts a mobile version of a webpage to a PC version of a webpage if a size of a screen of a portable phone is expanded to a size of a screen of a dual display or a size of a expanded display when the portable phone is displaying the mobile version of a webpage in a basically predetermined size of the portable phone.

To achieve these and other advantage and in accordance with the purpose of the invention, as embodied and broadly described herein, there is provided a method for controlling an internet browsing mode of a portable phone in accordance with the recognition of a display mode of the portable phone, wherein if a basic screen of a portable phone is expanded to an expanded screen when a mobile version of a webpage is being displayed in the basic screen, the method automatically converts a webpage mode such that a PC (Personal Computer) version of a webpage is displayed in an expanded screen, the method comprising: recognizing a current display mode as a basic screen mode in a portable phone (S21); recognizing a mobile version mode in which a mobile version of a webpage is displayed with the basic screen mode of the portable phone (S22); recognizing that a screen of the mobile version mode is expanded to a screen of an expanded screen mode by user' s operation when an internet is being executed with the mobile version mode in the basic screen mode, (S23); searching an address of a PC version of a webpage corresponding to a mobile version of a webpage (S24); receiving a PC version of a webpage corresponding to the mobile version of a webpage by using a searched address (S25); and displaying the received PC version of a webpage in the expanded screen mode (S26).

The portable phone may be one of a dual display portable phone which is driven in a basic screen mode when only a first screen is being operated and is driven in an expanded screen mode when the first screen and a second screen are being operated, a flexible display portable phone which comprises a screen folded to display nothing in a folded screen in a basic screen mode and is driven in an expanded screen mode when the screen is being unfolded, and a portable phone which displays a display in a local screen of the portable phone and outputs video information to an external display device to be driven in an expanded screen mode when the external display device is being connected.

The searching an address of a PC version of a webpage (S24) may be performed by using one of analyzing a source code of a mobile version of a webpage to extract an address of a PC version of a webpage linked to a button of "PC version (S241); and transferring, by the portable phone, an address of a mobile version of a webpage displayed in the portable phone to an external server to receive an address of a PC version of a webpage from the external server.

The external server may receive an address of a mobile version of a webpage from the portable phone to transfer an address of a PC version of a webpage corresponding to the mobile version of a webpage to the portable phone in response to the address of a mobile version of a webpage, and the portable phone may receive an address of a PC version of a webpage from the external server by using at least one of searching, by the external server including a DB saving an address of a mobile version of a webpage and an address of a PC version of a webpage corresponding to the address of the mobile version of the webpage, the DB by using the address of the mobile version of the webpage received from the portable phone to provide the portable phone with a searched address of a PC version of a webpage; and receiving an address of a mobile version of a webpage and related metadata from the portable phone, requiring real time search to a contents server with the received address of the webpage and metadata, and then, providing the portable phone with a searched address of a PC version of a webpage.

The metadata may be information about contents displayed in a screen, and includes at least one or more of a content ID, a title, a created time.

The portable phone may display a PC version of a webpage in a screen by using an automatic display conversion or by displaying a button for a display conversion for a user in a screen to receive a selection of the button.

If a size of a screen of an expanded screen mode is downsized to a size of a screen of a basic screen mode when a PC version of a webpage is being displayed in the expanded screen mode, the expanded screen mode may be automatically converted to a mobile screen mode in which a mobile version of a webpage is displayed or the expanded screen mode is converted to the mobile screen mode depending on a user's confirmation button.

A system for controlling an internet browsing mode of a portable phone in accordance with the recognition of a display mode of the portable phone, wherein if a basic screen of a portable phone is expanded to an expanded screen when a mobile version of a webpage is being displayed in the basic screen, the system automatically converts a webpage mode such that a PC (Personal Computer) version of a webpage is displayed in an expanded screen, the system comprising a portable phone in which an application is installed, wherein, the application comprises: a module recognizing a current display mode as a basic screen mode; a module recognizing mobile version mode in which a mobile version of a webpage is displayed when the portable phone is being driven in the basic screen mode; a module recognizing a change from a basic screen mode, in which an internet is being executed in a mobile version mode, to an expanded screen mode by a user' s operation; a module searching an address of a PC version of a webpage corresponding to a mobile version of a webpage; a module receiving a PC version of a webpage by using a searched address; and a module displaying a received PC version of a webpage in the expanded screen mode.

### Advantageous Effects

According to the embodiments of the present invention, if a size of a screen of a basic screen mode, in which a mobile version of a webpage is mainly displayed in a portable phone, is expanded to a size of a screen of an expanded screen mode, a PC version of a webpage corresponding to the mobile version of a webpage is displayed automatically or depending on user's confirmation, and thus, user' s convenience is improved.

### Brief Description of Drawings

The accompanying drawings, which are included to provide a further understanding of the invention and are incorporated in and constitute a part of this application, illustrate embodiments of the invention and together with the description serve to explain the principle of the invention. In the drawings:

FIG. 1 is an exemplary diagram illustrating a change of a display depending on a change of an internet browsing mode in a system for controlling an internet browsing mode of a portable phone according to an embodiment of the present invention;

FIG. 2 shows a category of an internet browsing mode according to an embodiment of the present invention;

FIG. 3 is an exemplary diagram illustrating a portable phone providing an expanded screen mode according to an embodiment of the present invention;

FIGS. 4 and 5 are application examples of an address server in a system for controlling an internet browsing mode of a portable phone according to an embodiment of the present invention;

FIG. 6 illustrates an inner structure of a portable phone according to an embodiment of the present invention; and

FIG. 7 is a schematic flowchart of a method for controlling an internet browsing mode of a portable phone according to an embodiment of the present invention.

### Vest Modes for carrying out the invention

Reference will now be made in detail to the exemplary embodiments of the present invention, examples of which are illustrated in the accompanying drawings. Wherever possible, the same reference numbers will be used throughout the drawings to refer to the same or like parts. Hereinafter, embodiments of the present invention will be described in detail with reference to the accompanying drawings.

### <1. A SYSTEM CONFIGURATION>

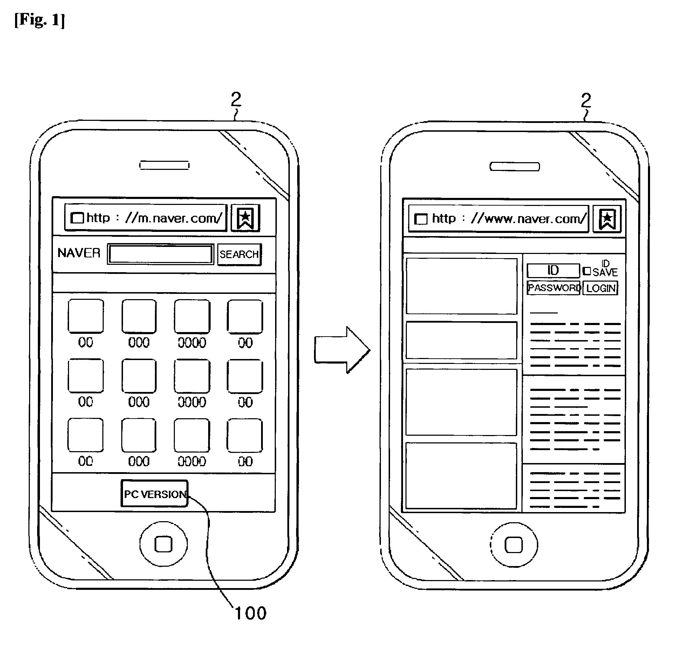

FIG. 1 is an exemplary diagram illustrating a change of a display depending on a change of an internet browsing mode in a system for controlling an internet browsing mode of a portable phone according to an embodiment of the present invention.

The system for controlling an internet browsing mode according to an embodiment of the present invention is configured to include a portable phone 2.

If the portable phone 2 accesses an address of a mobile version of a webpage, a mobile version of a webpage, which is for a portable phone having a small size screen, is provided as shown in a left portion of FIG. 1. The mobile version of a webpage is configured on an icon basis to provide some of the contents provided in an original PC version of a webpage.

A general PC version of a webpage has a type of address, such as 'www.site address.com' or 'www.site address.co.kr' . Also, a mobile version of a webpage has a type of address, such as 'm.site address.com' or 'm.site address.co.kr' by using the 'm' which is an abbreviation for "mobile", for showing that it is for a mobile phone.

If a mobile version of a webpage is displayed in a user's portable phone, a button 100 of "PC version" is displayed in a lower portion of the mobile version of the webpage. A user, who wants to search contents of the mobile version of the webpage in a PC version of a webpage corresponding to the mobile version of the webpage, pushes the button 100 of "PC version". If the button 100 of "PC version" is selected, as shown in a screen of a portable phone of a right portion of FIG. 1, a PC version of a webpage displayed in a screen of a general computer is displayed in a screen of a portable phone.

In the system for controlling an internet browsing mode according to an embodiment of the present invention, if the portable phone 2 senses a screen mode, and thus, senses a change from a basic screen mode to an expanded screen mode, the portable phone 2 automatically converts a display displaying a mobile version of a webpage to a display displaying a PC version of a webpage, even though a user does not push the button 100 of "PC version" every time after scrolling the mobile version of a webpage to a lower portion of the mobile version of a webpage.

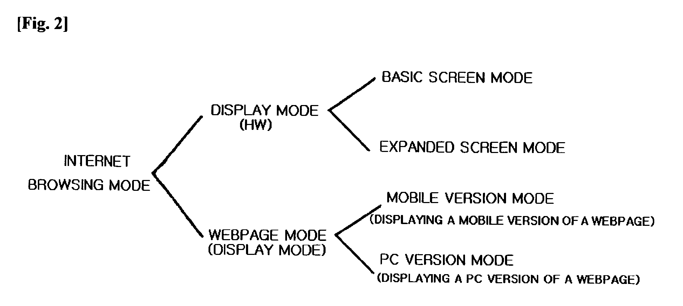

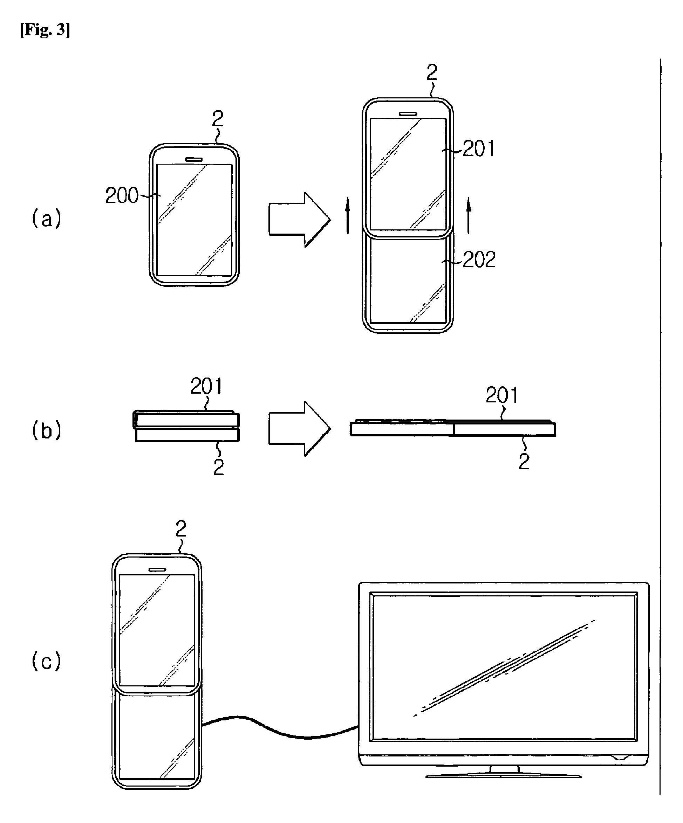

FIG. 2 shows a category of an internet browsing mode according to an embodiment of the present invention, and FIG. 3 is an exemplary diagram illustrating a portable phone 2 providing an expanded screen mode according to an embodiment of the present invention.

First of all, referring to FIG. 2, an internet browsing mode applied to an embodiment of the present invention is categorized into a display mode, and a webpage mode. Here, the display mode is also referred to as a hardware mode and is categorization depending on a type of hardware, and the webpage mode is also referred to as a display mode and is categorization depending on a type of webpage. Moreover, the display mode is categorized into a basic screen mode and an expanded screen mode. Also, the webpage mode is categorized into a mobile version mode shown in a left portion of FIG. 1, and a PC version mode shown in a right portion of FIG. 1.

Next, referring to FIG. 3, as shown in a portion (a), a first screen 201 is operated in a basic screen mode when a top folder of a portable phone 2 is being closed. If the top folder slides to move, a bottom folder appears, and thus, a second screen 202 is exposed. That is, a portable phone 2 shown in a portion (a) is a dual display portable phone including two display-displaying means which are the first screen 201 and a second screen. Here, if a user pushes the top folder to an upper portion when a mobile version of a webpage is being displayed through the first screen 201 in a basic screen mode, the second screen 202 appears and the basic screen mode is converted to the expanded screen mode. Also, at the same time, the first screen 201 and the second screen 202 constitutes one whole screen, and thus, a PC version of a webpage is displayed.

A portable phone 2 shown in a portion (b) is a flexible display portable phone. The portable phone 2 includes one screen which is a first screen 201. In the portable phone 2 shown in a portion (b), the screen can be folded. Therefore, if a folder is closed, only a half side of the screen is exposed to an outside, and other half side of the screen is folded to be positioned between folders. Also, if the folder moves to be opened, the other half side, which has been hidden in a folded state, is unfolded to be exposed to an outside, and thus, a basic screen mode is converted to an expanded screen mode.

In a portion (c), a state where a portable phone 2 is connected to an external computer terminal or a display device through a cable and the portable phone 2 recognizes the external computer terminal or a display device as an external peripheral device to display video information through the external computer terminal or a display device is illustrated. It is illustrated that the portable phone 2 outputs the video information through the cable. However, the present embodiment is not limited thereto, and therefore, it is possible for the portable phone to output the video information by using wireless communications. For example, the portable phone and a body of the computer terminal may be connected through a cable or a wireless, and thus, video information outputted from the portable phone may be displayed in a monitor of the computer terminal. Moreover, the portable phone and a monitor (or a TV) may be connected through a cable or a wireless, and thus, video information outputted from the portable phone may be displayed in the monitor. A mode displayed in a screen of portable phone is a basic screen mode and a mode displayed in an external monitor is an expanded screen mode.

In the above-described exemplary environments of the three types of portable phones shown in FIG. 3, if a basic screen mode, in which a display is being displayed by using a mobile version mode, is converted to an expanded screen mode, a PC version of a webpage of a PC version mode is automatically displayed. Here, the above-described three types of portable phones shown in FIG. 3 are for convenience of a description, and do not limit types of portable phone applied to the present invention. Therefore, it is apparent that various types of portable phone may be applied to the present invention.

In the present invention, if a mobile version mode is converted to a PC version mode when a mobile version of a webpage of a mobile version mode is being displayed, a PC version of a webpage is displayed. This is performed by accessing an address of a PC version of a webpage, receiving a webpage corresponding to the address and displaying the webpage. Here accessing the address of a PC version of a webpage is performed by using a link address which is included in a source of a mobile version of a webpage and is assigned to the button 100 of "PC version". Here, it is possible to automatically generate an event denoting that the button 100 of "PC version" is selected. That is, if a mobile version mode is converted to a PC version mode when a special URL, contents or the like are being displayed in a mobile version mode, a display of a PC version mode corresponding to the URL, contents or the like is displayed.

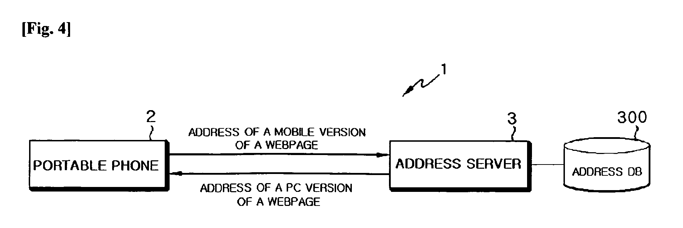

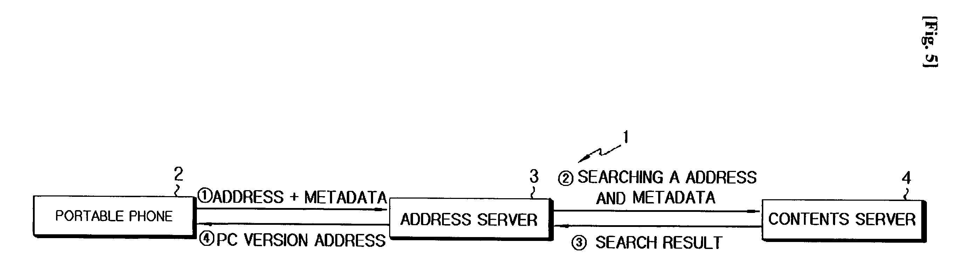

FIGS. 4 and 5 illustrate a system for controlling an internet browsing mode of a portable phone according to an embodiment of the present invention further including an address server 3.

In the above description referring to FIGS. 1 to 3, a system for controlling an internet browsing mode of a portable phone is described, and the system includes a portable phone 2. In the present invention, a portable phone 2 opens a source of a mobile version of a webpage to use a link address assigned to the button 100 of "PC version" or generates an event denoting that the button 100 of "PC version" is selected, and thus, receives a PC version of a webpage corresponding to the mobile version of a webpage to display the PC version of a webpage.

Moreover, in FIGS. 4 and 5, another configuration according to another embodiment of the present invention is shown, and the system further includes an address server 3. If a portable phone 2 senses a change from a basic screen mode to an expanded screen mode when a display is being displayed by using a mobile version mode in a basic screen mode, the portable phone transfers an address of a mobile version of a webpage to the address server 3, and then, receives a PC version of a webpage corresponding to the mobile version of a webpage.

Referring to FIG. 4, the address server 3 receives an address of a mobile version of a webpage from a portable phone 2, searches an address DB 300, and provides the portable phone 2 with an address of a PC version of a webpage corresponding to the address of a mobile version of a webpage.

Referring to FIG. 5, if the address server 3 receives an address of a mobile version of a webpage and metadata from a portable phone 2, the address server 3 searches a contents server 4 in real time by using the received address and metadata, receives an address of a PC version of a webpage as response results from the contents server, and then, provides the portable phone 2 with the address of a PC version of a webpage. Here, the metadata includes a title of the mobile version of a webpage (contents), a size of a file, a created date of a file, or the like. Also, the contents server 4 is a server providing a mobile version of a webpage and a PC version of a webpage.

Therefore, it is apparent that identity (relation) of displayed contents is maintained even though a mobile version mode is converted to a PC version mode in a portable phone 2 shown in FIGS. 1 to 5, and thus, an address is changed.

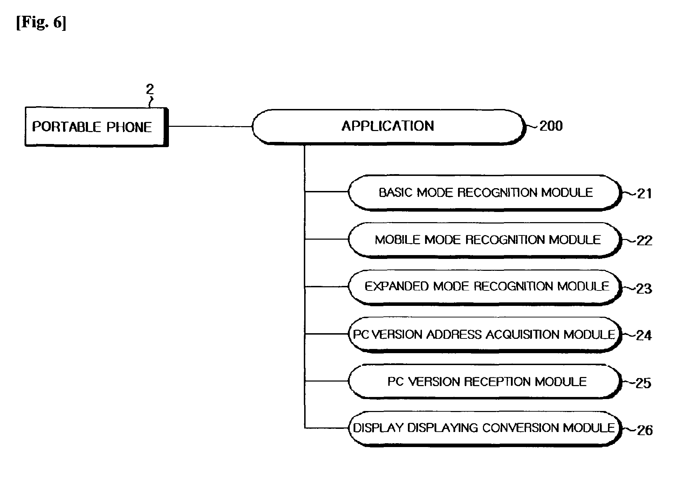

FIG. 6 illustrates an inner structure of a portable phone 2 according to an embodiment of the present invention.

An application 200 is installed in a portable phone 2 according to an embodiment of the present invention. The application 200 automatically acquires an address of a PC version of a webpage, accesses acquired address of a PC version of a webpage, and thus displays a received PC version of a webpage in an expanded screen. A main agent distributing the application 200 may be a service provider server, a homepage of a mobile carrier or the contents server 4.

Also, the application 200 includes a basic mode recognition module 21 recognizing a state of a basic screen mode of a portable phone 2 to save the state, a mobile mode recognition module 22 recognizing a state of a mobile version mode to save the state, a expanded mode recognition module 23 recognizing a change from a basic screen mode, in which a display is being displayed in a mobile version mode, to an expanded screen mode, a PC version address acquisition module 24 sensing an expanded screen mode to acquire an address of a PC version of a webpage corresponding to a mobile version of a webpage, a PC version reception module 25 receiving a PC version of a webpage by using a acquired PC version address and a display displaying conversion module 26 converting a display to a PC version of a webpage received when a mobile version of a webpage is being displayed.

A detail function and operation of each of the elements configuring the system for controlling an internet browsing mode of a portable phone will be described with respect to a method for controlling an internet browsing mode described below.

### <2. A METHOD CONFIGURATION>

A method for controlling an internet browsing mode according to an embodiment of the present invention may be realized by constructing the above-described system for controlling an internet browsing mode.

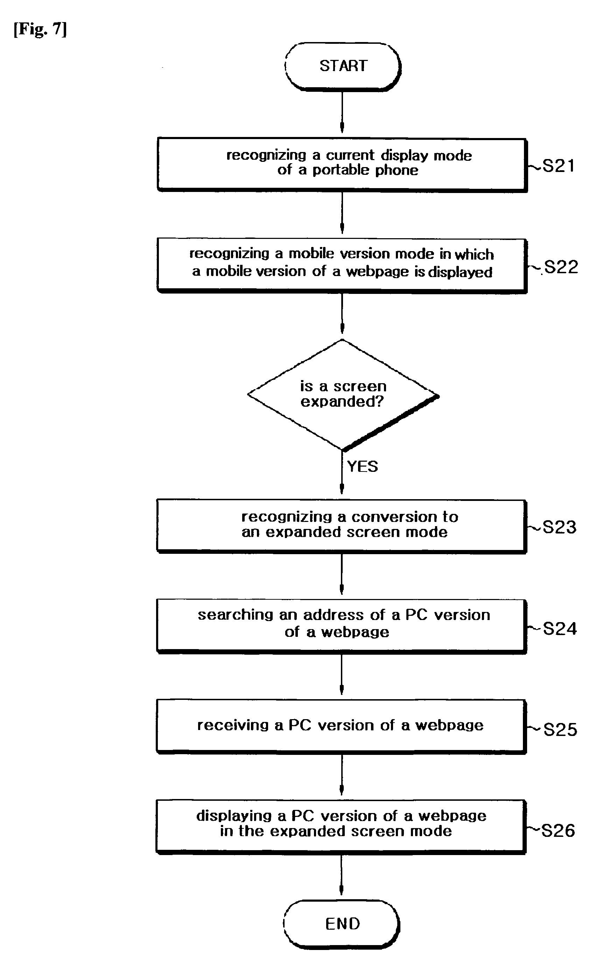

FIG. 7 is a schematic flowchart of a method for controlling an internet browsing mode of a portable phone 2 according to an embodiment of the present invention.

In the application 200 of a portable phone 2, the basic mode recognition module 21 recognizes a basic screen mode to save a state of a recognized display mode at a step S21.

Also, the mobile mode recognition module 22 recognizes a mobile version mode in which a portable phone 2 displays a mobile version of a webpage to save a state of a recognized webpage mode at a step S22.

Moreover, if a basic screen mode, in which a display is being displayed by using a mobile version mode of a portable phone 2, is converted to a expanded mode, the expanded mode recognition module 23 recognizes the conversion to save a converted mode at a step S23.

Preferably, in the present invention, the recognizing the conversion to an expanded screen mode is performed, as described above with reference to three types of portable phones illustrated in FIG. 3 for convenience, by using a dual display portable phone including a first screen 201 and a second screen 202, a flexible display portable phone including a first screen a hidden portion of which is exposed to an outside if the folded first screen 201 is expanded when only a portion of the folded first screen 201 is being exposed to an outside, and a portable phone outputting video information from a screen of the portable phone to an external connected display device to display a display.

If an expanded screen mode is recognized, the PC version address acquisition module 24 searches an address of a PC version of a webpage corresponding to a mobile version of a webpage currently displayed in a screen to acquire the address of a PC version of a webpage at a step S24.

More preferably, the searching an address of a PC version of a webpage is performed by analyzing a source code of a mobile version of a webpage currently displayed in a portable phone 2 to extract an address of a PC version of a webpage linked to a button 100 of "PC version". Also, as described above, it is possible to automatically generate an event denoting that the button 100 of "PC version" is selected. It is a basic composition of the present invention that an address of a PC version of a webpage is searched in a portable phone 2.

Moreover, in another embodiment, as described with reference to FIGS. 4 and 5, an address server 3 receives an address of a mobile version of a webpage from a portable phone 2, the address server 3 searches an address DB 300 or searches a contents server 4 in real time to acquire a searched address of a PC version of a webpage, and then, can provide the portable phone 2 with the address of a PC version of a webpage. Here, it is performed as follows that the address server 3 searches the contents server 4 in real time. That is, the address server 3 receives an address of a mobile version of a webpage and related metadata (information about a webpage and contents), requires real time search to the contents server 4 with the received address of the webpage and metadata, and then, provides a portable phone 2 with a searched address of a PC version of a webpage. The metadata is, for example, information about contents displayed in a screen, and includes at least one or more of a content ID, a title, a created time.

If an address of a PC version of a webpage is acquired, the PC version reception module 25 receives a PC version of a webpage corresponding to an acquired address at a step S25.

If a webpage is received, the PC version of a webpage received in an expanded screen mode of the portable phone 2 is automatically displayed at a step S26.

In the above-described embodiment, a mobile version mode is automatically converted to a PC version mode. However, it is possible in a portable phone 2 of the present invention that a button for a mode conversion is displayed in a screen of a portable phone for a user and a PC version of a webpage is displayed by selecting the button.

Also, in the portable phone, if a size of a screen of an expanded screen mode is downsized to a size of a screen of a basic screen mode when a PC version of a webpage is being displayed in the expanded screen mode, a PC version mode may be converted to a mobile version mode in which a mobile version of a webpage corresponding to the PC version of a webpage is displayed. It is apparent that this automatic return also may be performed by an automatic display conversion or a user' s confirmation.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for controlling an internet browsing mode of a portable phone in accordance with the recognition of a display mode of the portable phone, wherein if a basic screen of a portable phone is expanded to an expanded screen when a mobile version of a webpage is being displayed in the basic screen, the method automatically converts a webpage mode such that a PC (Personal Computer) version of a webpage is displayed in an expanded screen, the method comprising:
recognizing a current display mode as a basic screen mode in a portable phone (S21);
recognizing a mobile version mode in which a mobile version of a webpage is displayed with the basic screen mode of the portable phone (S22);
recognizing that a screen of the mobile version mode is expanded to a screen of an expanded screen mode by user' s operation when an internet is being executed with the mobile version mode in the basic screen mode, (S23);
searching an address of a PC version of a webpage corresponding to a mobile version of a webpage (S24);
receiving a PC version of a webpage corresponding to the mobile version of a webpage by using a searched address (S25); and
displaying the received PC version of a webpage in the expanded screen mode (S26).

2. The method of claim 1, wherein,
the portable phone is one of a dual display portable phone which is driven in a basic screen mode when only a first screen is being operated and is driven in an expanded screen mode when the first screen and a second screen are being operated, a flexible display portable phone which comprises a screen folded to display nothing in a folded screen in a basic screen mode and is driven in an expanded screen mode when the screen is being unfolded, and a portable phone which displays a display in a local screen of the portable phone and outputs video information to an external display device to be driven in an expanded screen mode when the external display device is being connected.

3. The method of claim 1 or claim 2, wherein,
the searching an address of a PC version of a webpage (S24) is performed by using one of:
analyzing a source code of a mobile version of a webpage to extract an address of a PC version of a webpage linked to a button of "PC version (S241); and
transferring, by the portable phone, an address of a mobile version of a webpage displayed in the portable phone to an external server to receive an address of a PC version of a webpage from the external server.

4. The method of claim 3, wherein,
the external server receives an address of a mobile version of a webpage from the portable phone to transfer an address of a PC version of a webpage corresponding to the mobile version of a webpage to the portable phone in response to the address of a mobile version of a webpage, and
the portable phone receives an address of a PC version of a webpage from the external server by using at least one of:
searching, by the external server including a DB saving an address of a mobile version of a webpage and an address of a PC version of a webpage corresponding to the address of the mobile version of the webpage, the DB by using the address of the mobile version of the webpage received from the portable phone to provide the portable phone with a searched address of a PC version of a webpage; and
receiving an address of a mobile version of a webpage and related metadata from the portable phone, requiring real time search to a contents server with the received address of the webpage and metadata, and then, providing the portable phone with a searched address of a PC version of a webpage.

5. The method of claim 4, wherein,
the metadata is information about contents displayed in a screen, and includes at least one or more of a content ID, a title, a created time.

6. The method of claim 5, wherein,
the portable phone displays a PC version of a webpage in a screen by using an automatic display conversion or by displaying a button for a display conversion for a user in a screen to receive a selection of the button.

7. The method of claim 6, wherein,
if a size of a screen of an expanded screen mode is downsized to a size of a screen of a basic screen mode when a PC version of a webpage is being displayed in the expanded screen mode, the expanded screen mode is automatically converted to a mobile screen mode in which a mobile version of a webpage is displayed or the expanded screen mode is converted to the mobile screen mode depending on a user's confirmation button.

8. A system for controlling an internet browsing mode of a portable phone in accordance with the recognition of a display mode of the portable phone, wherein if a basic screen of a portable phone is expanded to an expanded screen when a mobile version of a webpage is being displayed in the basic screen, the system automatically converts a webpage mode such that a PC (Personal Computer) version of a webpage is displayed in an expanded screen, the system comprising:
a portable phone in which an application is installed, wherein,
the application comprises:
a module recognizing a current display mode as a basic screen mode;
a module recognizing mobile version mode in which a mobile version of a webpage is displayed when the portable phone is being driven in the basic screen mode;
a module recognizing a change from a basic screen mode, in which an internet is being executed in a mobile version mode, to an expanded screen mode by a user' s operation;
a module searching an address of a PC version of a webpage corresponding to a mobile version of a webpage;
a module receiving a PC version of a webpage by using a searched address; and
a module displaying a received PC version of a webpage in the expanded screen mode.
